# EUROPÄISCHE PATENTSCHRIFT

(11) **EP 1 374 551 B1**
(45) Veröffentlichungstag und Bekanntmachung des Hinweises auf die Patenterteilung: **04.10.2006**
(21) Anmeldenummer: 02727269.9
(22) Anmeldetag: 26.03.2002
(51) Int. Cl.: H04M 15/00, H04M 15/28

(54) **VERFAHREN ZUR TARIFINFORMATION VON TEILNEHMERN EINES DIGITALEN MOBILKOMMUNIKATIONSNETZES**
METHOD FOR PROVIDING PRICE INFORMATION TO SUBSCRIBERS OF A DIGITAL MOBILE COMMUNICATION NETWORK
PROCEDE D'INFORMATIONS RELATIVES AUX TARIFS POUR DES ABONNES D'UN RESEAU DE COMMUNICATION MOBILE NUMERIQUE

(30) Priorität: 27.03.2001 DE 10114964
(43) Veröffentlichungstag der Anmeldung: 02.01.2004
(73) Patentinhaber: T-Mobile Deutschland GmbH, 53227 Bonn (DE)
(72) Erfinder: VÖHRINGER, Gerrit, 53111 Bonn (DE)
(74) Vertreter: Riebling, Peter
(86) Internationale Anmeldenummer: PCT/DE2002/001104
(87) Internationale Veröffentlichungsnummer: WO 2002/078315

(56) Entgegenhaltungen:
- EP-A- 1 056 269
- WO-A-97/37503
- WO-A-98/52344
- WO-A-99/43144
- GB-A- 2 349 541

## Beschreibung

Die Erfindung betrifft ein Verfahren zur TarifInformation von Teilnehmern eines digitalen Mobilkommunikationsnetzes.

In der Telekommunikation, insbesondere bei digitalen Mobilkommunikationsnetzen, bestehen eine Vielzahl von verschiedenen Tarifen und Tarifsystemen. Die Tarife sind u.a. abhängig von der vom Teilnehmer gewählten Tarifgruppe, der Tageszeit, dem Ziel-Kommunikationsrietz sowie der Entfernung (Inland/Ausland).
Zwar werden die Teilnehmer der Mobilkommunikationsnetze in der Regel über die einzelnen Gesprächstarife gut informiert, dennoch ist es schwierig, den Überblick über die tatsächlich zu erwartenden Gesprächskosten zu behalten.

Ein anderes Problem ist die sogenannte MNP (Mobile Number Portability). Aufgrund der MNP ist es möglich, dass ein Teilnehmer eines bestimmten Mobilfunknetzes auch bei einem Wechsel zu einem anderen Mobilfunknetz seine ursprüngliche Rufnummer beibehalten kann. Für einen Anrufer ist es somit nicht mehr möglich, den Tarif für das beabsichtigte Gespräch direkt anhand der Nummer festzustellen, die er gewählt hat. So könnte eine gewählte, ursprünglich für das deutsche D1 Mobilfunknetz vergebene Rufnummer 0171 1234567 aufgrund der MNP mittlerweile zu einem Teilnehmer gehören, der zu einem anderen deutschen Mobilfunknetz gewechselt hat, so dass der Gesprächstarif teurer ist als ursprünglich angenommen.

Die WO 94/28670 A1 offenbart ein Verfahren zur Tarifinformation von Teilnehmern eines digitalen Mobilkommunikationsnetzes, wobei der Teilnehmer bei Anwahl einer Rufnummer eine Tarifinformation über die zu erwartenden Verbindungskosten erhält. Telefoniert der Teilnehmer innerhalb seines Heimatnetzes bzw. seiner Heimatzone, so kann auf eine Tarifinformation verzichtet werden.
Aus US 6 018 652 A ist ebenfalls ein Verfahren zur Tarifinformation eines Mobilfunkteilnehmers bekannt, bei dem der Teilnehmer durch eine Sprachansage über den Gesprächstarif informiert wird.

Die EP 1 065 873 A2 offenbart ein Verfahren zur Gebührenerhebung in einem Telefonnetz, insbesondere ein Verfahren zur Gebührenbefreiung bzw. Gebührenreduktion bei einem Anruf bestimmter Rufnummern, wobei dem Anrufer die Gebühreninformation beispielsweise per Sprachansage oder per Kurznachricht mitgeteilt wird.

Die Aufgabe der Erfindung besteht darin, ein Verfahren zur Tarifinformation von Teilnehmern eines digitalen Mobilkommunikationsnetzes anzugeben, das den Teilnehmer auf einfache Weise unmittelbar über die Kosten eines beabsichtigten Anrufes informiert.

Diese Aufgabe wird durch die Merkmale des Patentanspruchs 1 gelöst.

Erfindungsgemäß wird dem anrufenden Teilnehmer im Moment des Verbindungsaufbaus - oder aber bereits vor dem eigentlichen Verbindungsaufbau - eine Kurznachricht (SMS) zugespielt, die den Teilnehmer über den Tarif des folgenden Gespräches informiert. Der Teilnehmer kann diese Funktion natürlich abschalten.
Wird der Teilnehmer vor dem Aufbau der gewünschten Verbindung informiert, kann er durch Bestätigen der übermittelten Tarifinformation den weiteren Verbindungsaufbau freigeben oder abbrechen.

Zur Tarifinformation wird ein bestimmter SMS-Typ genutzt, bei dem die SMS zum einen direkt auf dem Display des Mobilfunkendgerätes erscheint - gemeinhin unter der Anzeige des aktiven Netzes - und zum anderen nicht auf der SIM-Karte des Teilnehmers gespeichert wird, wie es bei herkömmlichen SMS üblich ist. Diese Form von SMS wird z.B. bei der Benachrichtigung über das Zustellen einer SMS auch schon heute in den Mobilfunknetzen verwendet. Vorzugsweise handelt es sich um eine Kurznachricht mit hoher Priorität, eine sogenannten High-Priority-SMS. Diese Kurznachricht besitzt eine geringe Zustellzeit und wird unmittelbar auf der Anzeige des Mobilfunkendgeräts des Teilnehmers angezeigt.

Damit der Teilnehmer nicht bei jedem Anrufversuch eine SMS zur Tarifinformation erhält, wird das Senden der SMS auf die Fälle begrenzt, in denen der tatsächliche Tarif von dem abweicht, den man aufgrund der gewählten Rufnummer erwarten würde. Insbesondere bei Gesprächen zu Teilnehmern mit MNP-Rufnummer ist dies der Fall, aber auch bei Anrufen zu Sonderrufnummem, etc.

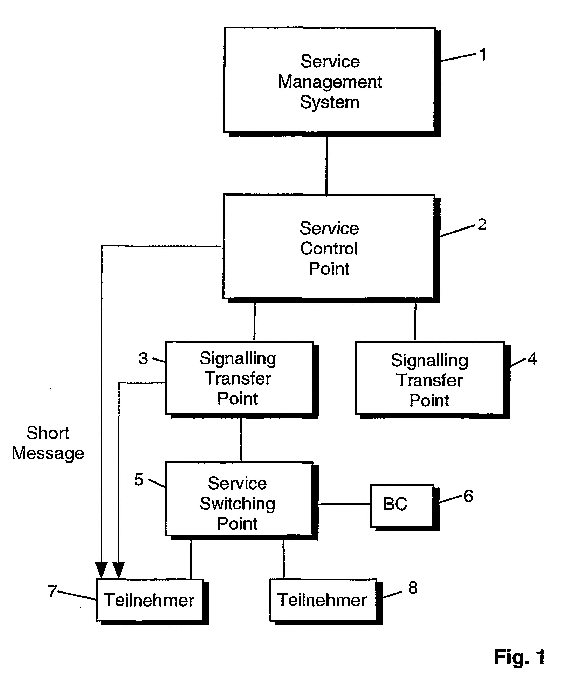

Ein Ausführungsbeispiel der Erfindung wird anhand von Figur 1 näher erläutert, wobei sich weitere Merkmale, Vorteile und Anwendungen der Erfindung ergeben.
Figur 1 zeigt schematisch den logischen Aufbau einer IN-Architektur bei einem digitalen Mobilfunknetz, z.B. des GSM-Typs.
   Die Steuerung des Verbindungsaufbaus und der Gesprächsweiterleitung erfolgt über sogenannte Signalisierungspunkte, insbesondere die Dienstesteuerungspunkte 2 (SCP: Service Control Point) und die Dienstevermittlungspunkte 5 (SSP: Service Switching Point), die von einem übergeordneten Diensteverwaltungssystem 1 (Service Management System) gesteuert werden.

Der Dienstesteuerungspunkt 2 dient zur Verwaltung der Netzpunkte und beinhaltet die Dienstelogik der Steuerungsebene, die für einen schnellen und flexiblen Verbindungsprozess notwendig ist. Ferner leitet der SCP 2 Verbindungsinformationen, z.B. für die Gebührenerfassung und Statistik, an andere Netzelemente weiter.

Der Dienstevermittlungspunkt 5 ist ein Netzknoten mit Netzzugangs und Vermittlungsfunktion und besitzt direkte Schnittstellen zu den Endgeräten der Teilnehmer 7, 8. Im Bereich des SSP 5 kann auch das Gebührenabrechnungszentrum 6 (BC: Billing Center) eingerichtet sein.

Zwischen dem SCP 2 und dem SSP 5 befinden sich Zeichengabetransferpunkte 3, 4 (STP: Signalling Transfer Point) für die Netzsignalisierung. Die STP dienen der Vermittlung von Zeichengabenachrichten (Signalisierungsnachrichten) zwischen den einzelnen Dienste- und Signalisierungspunkten, sie können aber auch andere Aufgaben im Rahmen der Zeichengabe übernehmen.

Die Netzelemente des Mobilfunknetzes, die der eigentlichen Gesprächsübermittlung dienen, wie z.B. Mobilfunkendgeräte (MS), Basisstationen (BTS) und deren Steuerungen (BSC), Mobilvermittlungsstellen (MSC), etc., sind in Figur 1 nicht dargestellt. Diese Elemente sind über entsprechende Schnittstellen mit den oben beschriebenen Signalisierungspunkten verbunden.

Erfindungsgemäß wird eine SMS zur Tarifinformation von dem Netzelement initiiert, das die Tarifierung des Gespräches festlegt. Im Fall eines Teilnehmers, der ein Teilnehmerverhältnis auf einer sogenannten Prepaid-Basis besitzt, ist dies z.B. der SCP 2. Beim Rufaufbau erhält der Teilnehmer 7 vom SCP 2 bzw. initiiert vom SCP eine SMS über die zu erwartenden Verbindungskosten. Dies ist durch einen logischen Peil vom SCP 2 zum Teilnehmer 7 dargestellt. Auf der Anzeige des Mobilfunkendgeräts des Teilnehmers erscheint dann z.B. "Dieses Gespräch kostet DM 1,29 pro Minute"

Im Fall von Teilnehmern mit regulärem Vertragsverhältnis initiiert der STP 3 das Absenden der SMS zur Tarifinformation, da der STP in diesem Fall auch die Portierung eines Teilnehmers feststellt. Dies ist ebenfalls durch einen Pfeil dargestellt.

## Patentansprüche

1. Verfahren zur Tarifinformation von Teilnehmern eines digitalen Mobilkommunikationsnetzes, wobei der Teilnehmer bei Anwahl einer Rufnummer eine Tarifinformation über die zu erwartenden Verbindungskosten erhält,
**dadurch gekennzeichnet,**
**dass** die Tarifinformation als Kurznachricht (SMS) mit hoher Priorität übermittelt wird, die unmittelbar auf der Anzeige des Mobilfunkendgeräts des Teilnehmers angezeigt wird, wobei die Tarifinformation nur dann erfolgt, wenn der tatsächliche Tarif von dem aufgrund einer gewählten Rufnummer zu erwartenden Tarif abweicht.

2. Verfahren nach Anspruch 1, **dadurch gekennzeichnet, dass** der Teilnehmer die Tarifinformation während des Aufbaus der gewünschten Verbindung erhält.

3. Verfahren nach Anspruch 1, **dadurch gekennzeichnet, dass** der Teilnehmer die Tarifinformation vor dem Aufbau der gewünschten Verbindung erhält.

4. Verfahren nach einem der vorhergehenden Ansprüche, **dadurch gekennzeichnet, dass** der Teilnehmer durch Bestätigen der übermittelten Tarifinformation den Verbindungsaufbau freigibt.

## Claims

1. Method of providing subscribers of a digital mobile communication network with information about costs, whereby the subscriber receives cost information about the anticipated connection charges when dialling a call number,
**characterised in that**
the cost information is transmitted in the form of a short message (SMS) with a high priority which is displayed directly on the display of the subscriber's mobile radio device, and the information about the cost is not displayed unless the actual cost differs from the expected cost of dialling a selected call number.

2. Method as claimed in claim 1, **characterised in that** the subscriber receives the cost information during the process of establishing the desired connection.

3. Method as claimed in claim 1, **characterised in that** the subscriber receives the cost information prior to establishing the desired connection.

4. Method as claimed in one of the preceding claims, **characterised in that** the subscriber authorises the connection by confirming the transmitted cost information.

## Revendications

1. Procédé d'information tarifaire relative à l'abonnement à un réseau numérique de télécommunication mobile, moyennant quoi l'abonné obtient, en composant un numéro d'appel, une information tarifaire sur les coûts de connexion à prévoir,
**caractérisé en ce que**
l'information tarifaire est transmise par message court (SMS) avec priorité élevée, qui s'affiche immédiatement sur l'écran du téléphone mobile de l'abonné, moyennant quoi l'information tarifaire n'a lieu que si le tarif réel est différent du tarif à prévoir sur la base d'un numéro d'appel choisi.

2. Procédé selon la revendication 1, **caractérisé en ce que** l'abonné obtient l'information tarifaire pendant l'établissement de la connexion souhaitée.

3. Procédé selon la revendication 1, **caractérisé en ce que** l'abonné obtient l'information tarifaire avant l'établissement de la connexion souhaitée.

4. Procédé selon l'une quelconque des revendications précédentes, **caractérisé en ce que** l'abonné valide l'établissement de la connexion en confirmant l'information tarifaire transmise.
